# EUROPEAN PATENT APPLICATION

(11) **EP 4 450 927 A1**
(43) Date of publication of application: **23.10.2024**
(21) Application number: 22921297.2
(22) Date of filing: 25.03.2022
(51) Int. Cl.: G01C 25/00, G05B 19/042

(54) **METHOD, APPARATUS AND DEVICE FOR GENERATING ROAD DATA EVALUATION REPORT, AND STORAGE MEDIUM**

(30) Priority: 19.01.2022 CN 202210057250
(71) Applicant: Zhejiang Geely Holding Group Co., Ltd., Hangzhou, Zhejiang 310000 (CN); Geely Automobile Research Institute (Ningbo) Co., Ltd, Ningbo, Zhejiang 315000 (CN)
(72) Inventor: LU, Hongxi, Hangzhou, Zhejiang 310000 (CN); JIN, Chen, Hangzhou, Zhejiang 310000 (CN); ZHOU, Junjie, Hangzhou, Zhejiang 310000 (CN); HENG, Yang, Hangzhou, Zhejiang 310000 (CN); LI, Guoqing, Hangzhou, Zhejiang 310000 (CN)
(74) Representative: Osterhoff, Utz
(86) International application number: PCT/CN2022/083063
(87) International publication number: WO 2023/137863

(57) **Abstract**

Disclosed are a method, an apparatus and a device for generating a road data evaluation report, and a computer-readable storage medium. The method includes: obtaining road data to be processed and road data to be evaluated (S10); desensitizing the road data to be processed to obtain target road data (S20); determining truth road data according to the target road data (S30); and generating a road data evaluation report according to the truth road data and the road data to be evaluated (S40).

## Description

This application claims priority to Chinese Patent Application No. 202210057250.3, filed on January 19, 2022. The disclosures of the above-mentioned applications are incorporated herein by reference in their entireties.

### TECHNICAL FIELD

The present application relates to the technical field of vehicles, and in particular to a method, an apparatus and a device for generating a road data evaluation report, and a storage medium.

### BACKGROUND

With the development of artificial intelligence technology, automobile electrification and intelligent technology will also undergo new changes. L3-level and above autonomous driving functions have higher requirements for vehicle intelligence and functional backup. Currently, major original equipment manufacturers (OEMs) and new car manufacturers are investing substantial resources in algorithm and function validation. Despite this, for different new mass-produced models, the validation of their mass-producible autonomous driving solutions still requires significant investment in research and development (R&D) and testing resources.

The above content is only used to assist in understanding the technical solutions of the present application, and does not represent an admission that the above content is prior art.

### SUMMARY

### TECHNICAL PROBLEM

The main objective of the present application is to provide a method, an apparatus and a device for generating road data evaluation report, and a storage medium, aiming to solve the technical problem of how to accurately obtain road data evaluation reports while reducing research and development (R&D) and testing resources.

### TECHNICAL SOLUTION

In order to achieve the above objective, the present application provides a method for generating a road data evaluation report, including:
obtaining road data to be processed and road data to be evaluated;
desensitizing the road data to be processed to obtain target road data;
determining truth road data according to the target road data; and
generating the road data evaluation report according to the truth road data and the road data to be evaluated.

In an embodiment, the obtaining the road data to be processed and the road data to be evaluated includes:
in response to receiving a trigger and timing instruction of a sensor, determining a data acquisition time signal of a vehicle according to the trigger and timing instruction; and
obtaining the road data to be processed and the road data to be evaluated according to the data acquisition time signal.

In an embodiment, the desensitizing the road data to be processed to obtain the target road data includes:
desensitizing the road data to be processed according to a preset desensitization rule to obtain road desensitized data;
determining road scene information corresponding to the road desensitized data; and
indexing the road desensitized data according to the road scene information to obtain the target road data.

In an embodiment, the determining the truth road data according to the target road data includes:
obtaining first driving control information of the vehicle; and
determining the truth road data according to the target road data and the first driving control information.

In an embodiment, the generating the road data evaluation report according to the truth road data and the road data to be evaluated includes:
obtaining second driving control information of the vehicle and a high-precision map; and
generating the road data evaluation report according to the truth road data, the road data to be evaluated, the second driving control information and the high-precision map.

In an embodiment, the obtaining the high-precision map includes:
obtaining an information acquisition time signal of the map;
acquiring map data to be processed according to the information acquisition time signal; and
generating the high-precision map according to the map data to be processed.

In an embodiment, the generating the high-precision map according to the map data to be processed includes:
obtaining vehicle control information of the vehicle;
determining original map data according to the vehicle control information and the map data to be processed; and
generating the high-precision map according to the original map data.

In addition, in order to achieve the above objective, the present application further provides an apparatus for generating a road data evaluation report, including: an acquisition module, a processing module, a determination module, and a generation module.

In an embodiment, the acquisition module is configured to obtain road data to be processed and road data to be evaluated.

In an embodiment, the processing module is configured to desensitize the road data to be processed to obtain target road data.

In an embodiment, the determination module is configured to determine truth road data according to the target road data.

In an embodiment, the generation module is configured to generate the road data evaluation report according to the truth road data and the road data to be evaluated.

In addition, in order to achieve the above objective, the present application further provides a device for generating a road data evaluation report, including: a memory, a processor, and a program for generating a road data evaluation report stored in the memory and executable on the processor. When the program for generating the road data evaluation report is executed by the processor, the steps of the above road data evaluation report generation method are implemented.

In addition, in order to achieve the above objective, the present application further provides a storage medium, a program for generating a road data evaluation report is stored on the storage medium, and when the program for generating the road data evaluation report is executed by a processor, the steps of the above road data evaluation report generation method are implemented.

### TECHNICAL EFFECT

In the present application, the road data to be processed and the road data to be evaluated are first obtained, and then the road data to be processed is desensitized to obtain the target road data, and then the truth road data is determined according to the target road data, and finally a road data evaluation report is generated according to the truth road data and the road data to be evaluated. Compared with the related art, different mass-produced models have different verification platforms, and different verification platforms need to be used to verify different mass-produced models in a targeted manner. In the present application, the obtained truth road data and the road data to be evaluated can be compared through a general development verification platform, so as to accurately obtain a road data evaluation report.

### BRIEF DESCRIPTION OF THE DRAWINGS

FIG. 1 is a structural schematic diagram of a device for generating a road data evaluation report of a hardware operating environment involved in an embodiment according the present application.
FIG. 2 is a schematic flowchart of a method for generating a road data evaluation report according to a first embodiment of the present application.
FIG. 3 is a schematic principle diagram of a digital truth and proof of concept (POC) development and verification platform system of the method for generating the road data evaluation report according to the first embodiment of the present application.
FIG. 4 is a schematic flowchart of the method for generating the road data evaluation report according to a second embodiment of the present application.
FIG. 5 is a schematic principle diagram of a high-precision map acquisition system of the method for generating the road data evaluation report according to the second embodiment of the present application.
FIG. 6 is a structural block diagram the device for generating the road data evaluation report according to the first embodiment of the present application.

The realization of the purpose, functional features and advantages of the present application will be further described with reference to the embodiments and the accompanying drawings.

### DETAILED DESCRIPTION OF THE EMBODIMENTS

It should be understood that the specific embodiments described herein are only used to explain the present application and are not used to limit the present application.

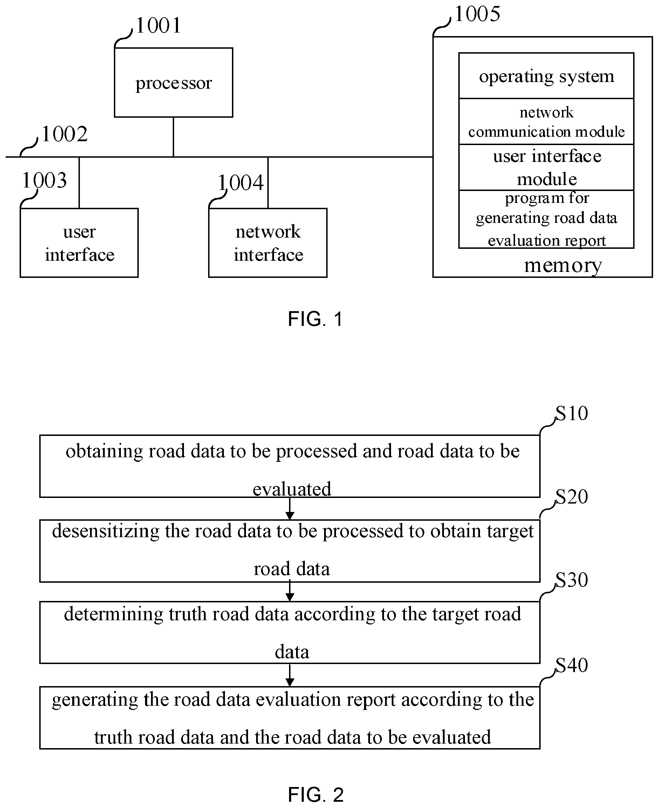

As shown in FIG. 1, which is a schematic diagram of the terminal structure of the hardware operating environment involved in an embodiment of the present application.

As shown in FIG. 1, the device for generating the road data evaluation report may include: a processor 1001, such as a central processing unit (CPU), a communication bus 1002, a user interface 1003, a network interface 1004, and a memory 1005. The communication bus 1002 is configured to realize connection communication between these components. The user interface 1003 may include a display screen, an input unit such as a keyboard, and the user interface 1003 may also include a standard wired interface or a wireless interface (such as a wireless fidelity (Wi-Fi) interface). The network interface 1004 may include a standard wired interface or a wireless interface (such as a wireless fidelity (Wi-Fi) interface). The memory 1005 may be a high-speed random-access memory (RAM) or a stable memory (non-volatile memory (NVM)), such as a disk memory. The memory 1005 may be a storage apparatus independent of the aforementioned processor 1001.

Those skilled in the art can understand that the terminal structure shown in FIG. 1 does not limit the device for generating the road data evaluation report, and may include more or fewer components than shown in the figure, or a combination of certain components, or differently arranged components.

As shown in FIG. 1, the memory 1005, which is a computer storage medium, may include an operating system, a network communication module, a user interface module and a program for generating a road data evaluation report.

In the device for generating the road data evaluation report shown in FIG. 1, the network interface 1004 is mainly configured to communicate with the network server; the user interface 1003 is mainly configured to interact data with the user; the processor 1001 and the memory 1005 in the device for generating the road data evaluation report of the present application may be provided in the device for generating the road data evaluation report, and the device for generating the road data evaluation report may use the processor 1001 to call the program for generating the road data evaluation report stored in memory 1005 and executes the method for generating the road data evaluation report provided in the embodiment of the present application.

The embodiment of the present application provides a method for generating a road data evaluation report. As shown in FIG. 2, which is a schematic flowchart of a method for generating a road data evaluation report according to a first embodiment of the present application.

In the embodiment, the method for generating the road data evaluation report includes the following steps:
Step S10: obtaining road data to be processed and road data to be evaluated.

It is easy to understand that the execution subject of this embodiment can be a device for generating a road data evaluation report with functions such as data processing, network communication and program running. The device for generating the road data evaluation report includes a digital truth and proof of concept (POC) development verification platform system and a high-precision map acquisition system, or can be other computer devices with similar functions, etc., which are not limited by the embodiment.

The processing manner for obtaining the road data to be processed and the road data to be evaluated can be that in response to receiving a trigger and timing instruction of a sensor, determining a data acquisition time signal of a vehicle according to the trigger and timing instruction; and then obtaining the road data to be processed and the road data to be evaluated according to the data acquisition time signal.

It should be noted that two sets of combined inertial navigation units are installed on the vehicle, namely the truth combined inertial navigation unit and the combined inertial navigation unit to be evaluated. The road data to be processed can be road data acquired by different sensors in the truth system sensor corresponding to the truth combined inertial navigation unit. The different sensors include cameras, lasers, radars, vehicle-road collaboration and ultrasound, etc. The road data to be evaluated can be road data acquired by the system sensor 1 to be evaluated and the system sensor 2 to be evaluated corresponding to the combined inertial navigation unit to be evaluated. The different sensors in the system sensor 1 to be evaluated and the system sensor 2 to be evaluated also include cameras, lasers, radars, vehicle-road collaboration and ultrasound, etc.

In order to unify the data acquisition of the sensors, when the user sets the trigger and timing instruction of the sensor, the truth combined inertial navigation unit will generate a corresponding data acquisition time signal, and the sensors can be turned on and acquire data at the same time according to the data acquisition time signal.

It should further be noted that the data acquisition unit includes a data cleaning/scene indexing module, a time signal module, a universal I/O port, a main board, a bypass (the wiring harness is divided into two), and a solid-state drive.

In an embodiment, in response to that the truth combined inertial navigation unit generates a corresponding data acquisition time signal, it is necessary to send the data acquisition time signal to the combined inertial navigation unit to be evaluated and the data acquisition unit respectively. The system sensor 1 to be evaluated and the system sensor 2 to be evaluated in the combined inertial navigation unit to be evaluated acquire the road data to be evaluated according to the data acquisition time signal. In response to that the time signal module in the data acquisition unit receives the data acquisition time signal sent by the truth combined inertial navigation unit, the data acquisition time signal is sent to the truth system sensor, and different sensors in the truth system sensor acquire the road data to be processed according to the data acquisition time signal.

Step S20: desensitizing the road data to be processed to obtain target road data.

The processing manner for desensitizing the road data to be processed to obtain target road data can be desensitizing the road data to be processed according to a preset desensitization rule to obtain road desensitized data; determining road scene information corresponding to the road desensitized data; and then indexing the road desensitized data according to the road scene information to obtain the target road data.

The preset desensitization rules can be understood as the desensitization rules set by users in accordance with the General Data Protection Regulation (GDPR) and road information security regulations. For example, if there is a user's facial image in the taken picture, the user's facial image needs to be blurred.

In the embodiment, the road data to be processed acquired by different sensors in the truth system sensor is sent to the data acquisition unit. The data cleaning/scene indexing module in the data acquisition unit can perform data cleaning, desensitization and scene indexing on the road data to be processed, and send the processed road data, i.e., the target road data, to the controller for processing.

Step S30: determining truth road data according to the target road data.

The processing manner for determining the truth road data according to the target road data may be obtaining first driving control information of the vehicle; and determining the truth road data according to the target road data and the first driving control information.

In an embodiment, the first driving control information is control information obtained by the first vehicle electronic control unit, i.e., the vehicle electronic control unit (ECU) through a controller area network (CAN) bus in a truth combined inertial navigation unit. The truth combined inertial navigation unit has second pulses, serial ports, and buses, etc. The first driving control information may be the vehicle's speed information and position information, etc.

In response to receiving the first driving control information and target road data acquired by the vehicle ECU through the CAN bus in the truth combined inertial navigation unit, the data acquisition unit directly generates truth road data according to the first driving control information and the target road data.

Step S40: generating the road data evaluation report according to the truth road data and the road data to be evaluated.

The processing manner for generating the road data evaluation report according to the truth road data and the road data to be evaluated may be obtaining second driving control information of the vehicle and a high-precision map; and generating the road data evaluation report according to the truth road data, the road data to be evaluated, the second driving control information and the high-precision map.

The second driving control information may be control information acquired by a driving assistance domain control or an autonomous driving domain control. The second driving control information may be vehicle steering angle information, vehicle wheel speed information, vehicle position information, etc.

It should further be noted that the high-precision maps can be obtained through maps provided by a high-precision map acquisition system, etc. The controller can evaluate and verify according to the truth road data, the road data to be evaluated, the second driving control information and the high-precision map, and finally generate a road data evaluation report for display.

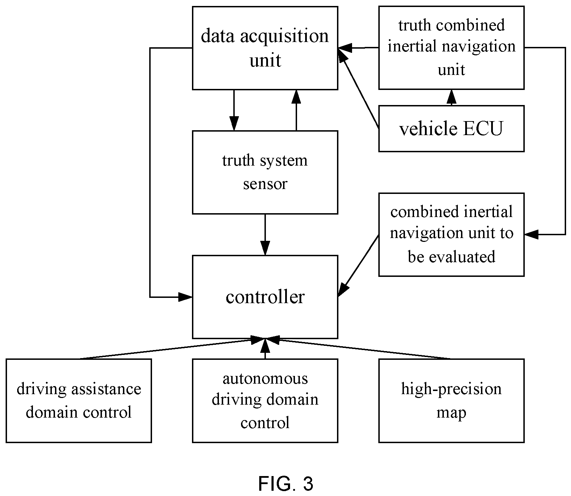

As shown in FIG. 3, which is a schematic principle diagram of a digital truth and proof of concept (POC) development and verification platform system of the method for generating the road data evaluation report according to the first embodiment of the present application. The digital acquisition truth and POC development and verification platform system includes a data acquisition unit, a truth combined inertial navigation unit, a vehicle ECU, a truth system sensor, a combined inertial navigation unit to be evaluated, a controller, a driving assistance domain control, an automatic driving domain control and a high-precision map. The data acquisition unit includes a data cleaning/scene indexing module, a time signal module, a general I/O port, a main board, a bypass (the wiring harness is divided into two) and a solid-state hard drive, etc. The truth combined inertial navigation unit includes a second pulse, a serial port and a bus, etc. The truth system sensors include cameras, lasers, radars, vehicle-road collaboration and ultrasound, etc. The combined inertial navigation unit to be evaluated includes a system sensor 1 to be evaluated and a system sensor 2 to be evaluated.

In the embodiment, in response to that the user sets the trigger and timing instruction of the sensor, the truth combined inertial navigation unit will generate a corresponding data acquisition time signal, and send the data acquisition time signal to the combined inertial navigation unit to be evaluated and the data acquisition unit respectively. The system sensor 1 to be evaluated and the system sensor 2 to be evaluated in the combined inertial navigation unit to be evaluated acquire the road data to be evaluated according to the data acquisition time signal, and send the road data to be evaluated to the controller. In response to that the time signal module in the data acquisition unit receives the data acquisition time signal sent by the truth combined inertial navigation unit, the data acquisition time signal is sent to the truth system sensor, and different sensors in the truth system sensor acquire the road data to be processed according to the data acquisition time signal, and send the acquired road data to be processed to the data acquisition unit. The data cleaning/scene indexing module in the data acquisition unit can perform data cleaning, desensitization and scene indexing on the road data to be processed, and generate truth road data from the processed road data, i.e., the target road data and the first driving control information acquired by the vehicle ECU, and send the truth road data to the controller for processing, etc. The controller can evaluate and verify according to the truth road data, the road data to be evaluated, the second driving control information acquired by the driving assistance domain control or the autonomous driving domain control, and the high-precision map, and finally generate a road data evaluation report for display.

In an embodiment, the digital acquisition truth and POC development and verification platform system supports the quantitative comparative evaluation of different POC solutions, and can compare and evaluate multiple solutions in real time online. The digital acquisition truth and POC development and verification platform system also includes a power supply module, which can power the data acquisition unit, the truth system sensor, the constant temperature system and the controller, etc. The data acquisition unit can also directly display the processed road data, etc.

In an embodiment, the road data to be processed and the road data to be evaluated are first obtained, and then the road data to be processed is desensitized to obtain the target road data, and then the truth road data is determined according to the target road data, and finally a road data evaluation report is generated according to the truth road data and the road data to be evaluated. Compared with the related art, different mass-produced models have different verification platforms, and different verification platforms need to be used to verify different mass-produced models in a targeted manner. In the embodiment, the obtained truth road data and the road data to be evaluated can be compared through a general development verification platform, so as to accurately obtain a road data evaluation report and improve user experience.

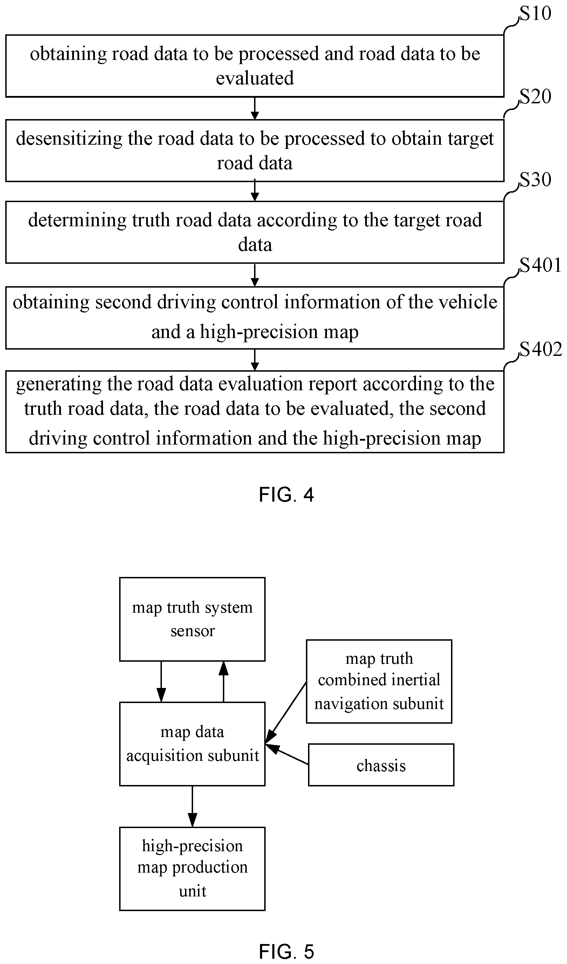

As shown in FIG. 4, which is a schematic flowchart of the method for generating the road data evaluation report according to a second embodiment of the present application.

Based on the above first embodiment, in this embodiment, the step S40 further includes:
Step S401: obtaining second driving control information of the vehicle and a high-precision map.

The second driving control information may be control information acquired by a driving assistance domain control or an autonomous driving domain control. The second driving control information may be vehicle steering angle information, vehicle wheel speed information, vehicle position information, etc.

It should further be noted that high-precision maps can be maps provided by high-precision map acquisition systems, etc.

The processing manner for obtaining the high-precision map may be obtaining an information acquisition time signal of the map; acquiring map data to be processed according to the information acquisition time signal; and generating the high-precision map according to the map data to be processed.

As shown in FIG. 5, which is a schematic principle diagram of a high-precision map acquisition system of the method for generating the road data evaluation report according to the second embodiment of the present application. The high-precision map acquisition system includes a map truth system sensor, a map data acquisition subunit, a map truth combined inertial navigation subunit, a chassis and a high-precision map production unit. The map truth system sensor includes a camera, a laser, a radar, a vehicle-road collaboration and an ultrasonic wave, etc. The map data acquisition subunit includes a map controller, a general I/O port, a time signal and a solid state, and the map truth combined inertial navigation subunit includes a second pulse, a serial port and a bus, etc. The high-precision map acquisition system also supports offline and online Simultaneous Localization and Mapping (SLAM) methods for high-precision map (incremental) production and updating.

In an embodiment, the information acquisition time signal of the map can be determined according to the map truth combined inertial navigation subunit, and the information acquisition time signal can be sent to the map data acquisition subunit. The time signal module in the map data acquisition subunit can obtain the information acquisition time signal, and send the information acquisition time signal to the map truth system sensor. The map truth system sensor acquires the map data to be processed according to the information acquisition time signal, and sends the map data to be processed to the map data acquisition subunit. The chassis can acquire the chassis information of the vehicle, and then send the chassis information to the map data acquisition subunit. The controller in the map data acquisition subunit determines the original map data according to the chassis information and the map data to be processed, and sends the original map data to the high-precision map production unit, so that the high-precision map production unit generates a high-precision map according to the original map data.

The high-precision map acquisition system further includes a power supply module, which can supply power to the map data acquisition subunit, the map truth system sensor and the constant temperature system.

Step S402: generating the road data evaluation report according to the truth road data, the road data to be evaluated, the second driving control information and the high-precision map.

In an embodiment, the truth road data, the road data to be evaluated, and the second driving control information can be obtained according to the digital truth and POC development and verification platform system. The high-precision map can be obtained according to the high-precision map acquisition system. The high-precision map production unit in the high-precision map acquisition system needs to send the generated high-precision map to the controller in the digital truth and POC development and verification platform system, so that the controller in the digital truth and POC development and verification platform system can generate a road data evaluation report according to the truth road data, the road data to be evaluated, the second driving control information and the high-precision map.

In an embodiment, the second driving control information and the high-precision map of the vehicle are first obtained, and then a road data evaluation report is generated according to the truth road data, the road data to be evaluated, the second driving control information and the high-precision map. In the related art, it is necessary to manually obtain the road data to be evaluated and manually analyze the road data to be evaluated. In this embodiment, the truth road data, the road data to be evaluated, the second driving control information and the high-precision map can be evaluated and verified by the controller in the digital truth and POC development and verification platform system, so as to obtain an accurate road data evaluation report.

In addition, an embodiment of the present application further provides a non-transitory storage medium, a program for generating a road data evaluation report is stored on the storage medium. When the program for generating the road data evaluation report is executed by a processor, the steps of the method for generating the road data evaluation report described above are implemented.

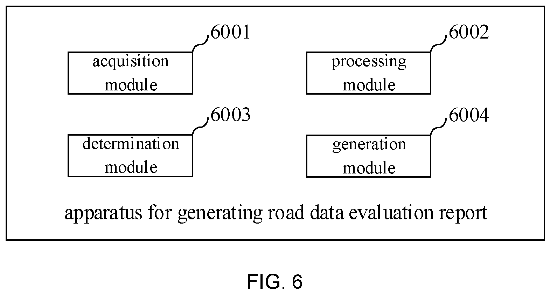

As shown in FIG. 6, which is a structural block diagram the device for generating the road data evaluation report according to the first embodiment of the present application.

As shown in FIG. 6, the device for generating the road data evaluation report provided according to an embodiment of the present application includes: an acquisition module 6001, a processing module 6002, a determination module 6003, and a generation module 6004.

The acquisition module 6001 is configured to obtain road data to be processed and road data to be evaluated.

The processing manner for obtaining the road data to be processed and the road data to be evaluated can be that in response to receiving a trigger and timing instruction of a sensor, determining a data acquisition time signal of a vehicle according to the trigger and timing instruction; and then obtaining the road data to be processed and the road data to be evaluated according to the data acquisition time signal.

It should be noted that two sets of combined inertial navigation units are installed on the vehicle, namely the truth combined inertial navigation unit and the combined inertial navigation unit to be evaluated. The road data to be processed can be road data acquired by different sensors in the truth system sensor corresponding to the truth combined inertial navigation unit. The different sensors include cameras, lasers, radars, vehicle-road collaboration and ultrasound, etc. The road data to be evaluated can be road data acquired by the system sensor 1 to be evaluated and the system sensor 2 to be evaluated corresponding to the combined inertial navigation unit to be evaluated. The different sensors in the system sensor 1 to be evaluated and the system sensor 2 to be evaluated also include cameras, lasers, radars, vehicle-road collaboration and ultrasound, etc.

In order to unify the data acquisition of the sensors, when the user sets the trigger and timing instruction of the sensor, the truth combined inertial navigation unit will generate a corresponding data acquisition time signal, and the sensors can be turned on and acquire data at the same time according to the data acquisition time signal.

It should further be noted that the data acquisition unit includes a data cleaning/scene indexing module, a time signal module, a universal I/O port, a main board, a bypass (the wiring harness is divided into two), and a solid-state drive.

In an embodiment, in response to that the truth combined inertial navigation unit generates a corresponding data acquisition time signal, it is necessary to send the data acquisition time signal to the combined inertial navigation unit to be evaluated and the data acquisition unit respectively. The system sensor 1 to be evaluated and the system sensor 2 to be evaluated in the combined inertial navigation unit to be evaluated acquire the road data to be evaluated according to the data acquisition time signal. In response to that the time signal module in the data acquisition unit receives the data acquisition time signal sent by the truth combined inertial navigation unit, the data acquisition time signal is sent to the truth system sensor, and different sensors in the truth system sensor acquire the road data to be processed according to the data acquisition time signal.

The processing module 6002 is configured to desensitize the road data to be processed to obtain target road data.

The processing manner for desensitizing the road data to be processed to obtain target road data can be desensitizing the road data to be processed according to a preset desensitization rule to obtain road desensitized data; determining road scene information corresponding to the road desensitized data; and then indexing the road desensitized data according to the road scene information to obtain the target road data.

The preset desensitization rules can be understood as the desensitization rules set by users in accordance with the GDPR and road information security regulations. For example, if there is a user's facial image in the taken picture, the user's facial image needs to be blurred.

In the embodiment, the road data to be processed acquired by different sensors in the truth system sensor is sent to the data acquisition unit. The data cleaning/scene indexing module in the data acquisition unit can perform data cleaning, desensitization and scene indexing on the road data to be processed, and send the processed road data, i.e., the target road data, to the controller for processing.

The determination module 6003 is configured to determine truth road data according to the target road data.

The processing manner for determining the truth road data according to the target road data may be obtaining first driving control information of the vehicle; and determining the truth road data according to the target road data and the first driving control information.

In an embodiment, the first driving control information is control information obtained by the first vehicle electronic control unit, i.e., the vehicle ECU through a CAN bus in a truth combined inertial navigation unit. The truth combined inertial navigation unit has second pulses, serial ports, and buses, etc. The first driving control information may be the vehicle's speed information and position information, etc.

In response to receiving the first driving control information and target road data acquired by the vehicle ECU through the CAN bus in the truth combined inertial navigation unit, the data acquisition unit directly generates truth road data according to the first driving control information and the target road data.

The generation module 6004 is configured to generate a road data evaluation report according to the truth road data and the road data to be evaluated.

The processing manner for generating the road data evaluation report according to the truth road data and the road data to be evaluated may be obtaining second driving control information of the vehicle and a high-precision map; and generating the road data evaluation report according to the truth road data, the road data to be evaluated, the second driving control information and the high-precision map.

The second driving control information may be control information acquired by a driving assistance domain control or an autonomous driving domain control. The second driving control information may be vehicle steering angle information, vehicle wheel speed information, vehicle position information, etc.

It should further be noted that the high-precision maps can be obtained through maps provided by a high-precision map acquisition system, etc. The controller can evaluate and verify according to the truth road data, the road data to be evaluated, the second driving control information and the high-precision map, and finally generate a road data evaluation report for display.

As shown in FIG. 3, which is a schematic principle diagram of a digital truth and proof of concept (POC) development and verification platform system of the method for generating the road data evaluation report according to the first embodiment of the present application. The digital acquisition truth and POC development and verification platform system includes a data acquisition unit, a truth combined inertial navigation unit, a vehicle ECU, a truth system sensor, a combined inertial navigation unit to be evaluated, a controller, a driving assistance domain control, an automatic driving domain control and a high-precision map. The data acquisition unit includes a data cleaning/scene indexing module, a time signal module, a general I/O port, a main board, a bypass (the wiring harness is divided into two) and a solid-state hard drive, etc. The truth combined inertial navigation unit includes a second pulse, a serial port and a bus, etc. The truth system sensors include cameras, lasers, radars, vehicle-road collaboration and ultrasound, etc. The combined inertial navigation unit to be evaluated includes a system sensor 1 to be evaluated and a system sensor 2 to be evaluated.

In the embodiment, in response to that the user sets the trigger and timing instruction of the sensor, the truth combined inertial navigation unit will generate a corresponding data acquisition time signal, and send the data acquisition time signal to the combined inertial navigation unit to be evaluated and the data acquisition unit respectively. The system sensor 1 to be evaluated and the system sensor 2 to be evaluated in the combined inertial navigation unit to be evaluated acquire the road data to be evaluated according to the data acquisition time signal, and send the road data to be evaluated to the controller. In response to that the time signal module in the data acquisition unit receives the data acquisition time signal sent by the truth combined inertial navigation unit, the data acquisition time signal is sent to the truth system sensor, and different sensors in the truth system sensor acquire the road data to be processed according to the data acquisition time signal, and send the acquired road data to be processed to the data acquisition unit. The data cleaning/scene indexing module in the data acquisition unit can perform data cleaning, desensitization and scene indexing on the road data to be processed, and generate truth road data from the processed road data, i.e., the target road data and the first driving control information acquired by the vehicle ECU, and send the truth road data to the controller for processing, etc. The controller can evaluate and verify according to the truth road data, the road data to be evaluated, the second driving control information acquired by the driving assistance domain control or the autonomous driving domain control, and the high-precision map, and finally generate a road data evaluation report for display.

In an embodiment, the digital acquisition truth and POC development and verification platform system supports the quantitative comparative evaluation of different POC solutions, and can compare and evaluate multiple solutions in real time online. The digital acquisition truth and POC development and verification platform system also includes a power supply module, which can power the data acquisition unit, the truth system sensor, the constant temperature system and the controller, etc. The data acquisition unit can also directly display the processed road data, etc.

In an embodiment, the road data to be processed and the road data to be evaluated are first obtained, and then the road data to be processed is desensitized to obtain the target road data, and then the truth road data is determined according to the target road data, and finally a road data evaluation report is generated according to the truth road data and the road data to be evaluated. Compared with the related art, different mass-produced models have different verification platforms, and different verification platforms need to be used to verify different mass-produced models in a targeted manner. In the embodiment, the obtained truth road data and the road data to be evaluated can be compared through a general development verification platform, so as to accurately obtain a road data evaluation report and improve user experience.

Other embodiments or specific implementation methods of the device for generating the road data evaluation report of the present application can refer to the above-mentioned method embodiments and will not be repeated here.

It should be noted that, in this document, the terms "comprising", "comprises" or any other variations thereof are intended to cover a non-exclusive inclusion, such that a process, method, article or system that includes a series of elements not only includes those elements, it also includes other elements not expressly listed or inherent in the process, method, article or system. Without further limitation, an element defined by the statement "comprises a..." does not exclude the presence of additional identical elements in a process, method, article or system that includes that element.

The above serial numbers of the embodiments of the present application are only for description and do not represent the advantages and disadvantages of the embodiments.

Through the above description of the embodiments, those skilled in the art can clearly understand that the methods of the above embodiments can be implemented by means of software plus the necessary general hardware platform. Of course, it can also be implemented by hardware, but in many cases the former is better implementation. Based on this understanding, the technical solution of the present application can be embodied in the form of a software product in essence or the part that contributes to the related art. The computer software product is stored in a storage medium (such as read-only memory (ROM)/RAM, disk, compact disc (CD)), including several instructions for a terminal device (which can be a mobile phone, computer, server, air conditioner, or network device, etc.) to execute the methods described in various embodiments of the present application.

The above are only some embodiments of the present application, and do not limit the scope of the present application thereto. Under the inventive concept of the present application, equivalent structural transformations made according to the description and drawings of the present application, or direct/indirect application in other related technical fields are included in the scope of the present application.

## Claims

1. A method for generating a road data evaluation report, **characterized by** comprising:
obtaining road data to be processed and road data to be evaluated;
desensitizing the road data to be processed to obtain target road data;
determining truth road data according to the target road data; and
generating the road data evaluation report according to the truth road data and the road data to be evaluated.

2. The method according to claim 1, wherein the obtaining the road data to be processed and the road data to be evaluated comprises:
in response to receiving a trigger and timing instruction of a sensor, determining a data acquisition time signal of a vehicle according to the trigger and timing instruction; and
obtaining the road data to be processed and the road data to be evaluated according to the data acquisition time signal.

3. The method according to claim 1 or 2, wherein the desensitizing the road data to be processed to obtain the target road data comprises:
desensitizing the road data to be processed according to a preset desensitization rule to obtain road desensitized data;
determining road scene information corresponding to the road desensitized data; and
indexing the road desensitized data according to the road scene information to obtain the target road data.

4. The method according to claim 1 or 2, wherein the determining the truth road data according to the target road data comprises:
obtaining first driving control information of the vehicle; and
determining the truth road data according to the target road data and the first driving control information.

5. The method according to claim 1, wherein the generating the road data evaluation report according to the truth road data and the road data to be evaluated comprises:
obtaining second driving control information of the vehicle and a high-precision map; and
generating the road data evaluation report according to the truth road data, the road data to be evaluated, the second driving control information and the high-precision map.

6. The method according to claim 5, wherein the obtaining the high-precision map comprises:
obtaining an information acquisition time signal of the map;
acquiring map data to be processed according to the information acquisition time signal; and
generating the high-precision map according to the map data to be processed.

7. The method according to claim 6, wherein the generating the high-precision map according to the map data to be processed comprises:
obtaining vehicle control information of the vehicle;
determining original map data according to the vehicle control information and the map data to be processed; and
generating the high-precision map according to the original map data.

8. An apparatus for generating a road data evaluation report, **characterized by** comprising:
an acquisition module configured to obtain road data to be processed and road data to be evaluated;
a processing module configured to desensitize the road data to be processed to obtain target road data;
a determination module configured to determine truth road data according to the target road data; and
a generation module configured to generate the road data evaluation report according to the truth road data and the road data to be evaluated.

9. A device for generating a road data evaluation report, **characterized by** comprising:
a memory;
a processor; and
a program for generating the road data evaluation report stored in the memory and executable on the processor;
wherein when the program for generating the road data evaluation report is executed by the processor, the method for generating the road data evaluation report according to any one of claims 1 to 7 is implemented.

10. A storage medium, **characterized in that**, a program for generating a road data evaluation report is stored on the storage medium, and when the program for generating the road data evaluation report is executed by a processor, the method for generating the road data evaluation report according to any one of claims 1 to 7 is implemented.
